# EUROPÄISCHE PATENTSCHRIFT

(11) **EP 3 256 382 B1**
(45) Veröffentlichungstag und Bekanntmachung des Hinweises auf die Patenterteilung: **29.04.2020**
(21) Anmeldenummer: 16708074.6
(22) Anmeldetag: 10.02.2016
(51) Int. Cl.: B64G 1/10

(54) **SONNENSTURM-WARNSYSTEM**
SOLAR STORM WARNING SYSTEM
SYSTÈME D'ALERTE DE TEMPÊTE SOLAIRE

(30) Priorität: 10.02.2015 DE 102015001549
(43) Veröffentlichungstag der Anmeldung: 20.12.2017
(73) Patentinhaber: Jones, Denise, 22297 Hamburg (DE)
(72) Erfinder: Jones, Denise, 22297 Hamburg (DE)
(74) Vertreter: Hoffmann Eitle
(86) Internationale Anmeldenummer: PCT/EP2016/000222
(87) Internationale Veröffentlichungsnummer: WO 2016/128134

(56) Entgegenhaltungen:
- CN-B- 102 745 342
- Anonymous: "KuaFu SWE mission", ESA , 3. Juli 2012 (2012-07-03), Seiten 1-14, XP002757813, Gefunden im Internet: URL:https://www.belspo.be/belspo/space/doc /euPolicy/2012_07_03/KuaFu.pdf [gefunden am 2016-05-19]
- Anonymous: "China plans "KuaFu Mission" for Sun probe.", China Daily , 20. Juli 2006 (2006-07-20), XP002757814, Gefunden im Internet: URL:http://www.chinadaily.com.cn/china/200 6-07/20/content_645326.htm [gefunden am 2016-05-19]
- BURT JOE SMITH BOB: "DEEP SPACE CLIMATE OBSERVATORY: THE DSCOVR MISSION", 2012 IEEE AEROSPACE CONFERENCE, 10 March 2012 (2012-03-10), - 10 March 2012 (2012-03-10), ISSN: 1095-323X
- Szabo Adam: "deep space climate observatory (DSCOVR)", 6th NASA Space Weather & Robotic Mission Operations Workshop , 18 October 2014 (2014-10-18), Retrieved from the Internet: URL:https://swc.ccmc.gsfc.nasa.gov/main//s ites/swrc/presentations/2014_NASA_SWx_Work shop/Szabo_DSCOVR%20Overview%20Space%20Wea ther%20Workshop.pdf [retrieved on 2019-02-07]

## Beschreibung

Die vorliegende Erfindung betrifft ein Sonnensturm-Frühwarnsystem zum Bereitstellen eines Warnsignals bei Herannahen eines Sonnensturms geladener Teilchen an die Erde.

So genannter Sonnenwind ist eine Strömung elektrisch geladener Teilchen, die von der Sonne aufgrund von Eruptionen in alle Richtungen abströmt. Sonnen-"Stürme" oder auch "magnetische Stürme" entstehen bekanntlich durch besonders starke Sonneneruptionen. Diese Teilchenströmungen bestehen hauptsächlich aus Protonen, Elektronen und Heliumkernen (Alphateilchen). Das Erdmagnetfeld schirmt die Erdoberfläche gegen eine solche, auf die Erde zuströmende, Teilchenwolke ab. Abhängig von der Stärke der Strömung wird aber mindestens das Erdmagnetfeld von ihr mindestens für die Dauer der Einwirkung in Form und Stärke verändert.

Zum Beispiel ein ungewöhnlich starker, auf die Erde gerichteter, Sonnensturm kann Ursache sein für ein Durchdringen der Teilchenströmung zur Erdoberfläche. Durch elektrischen und magnetischen Einfluss zunächst auf das Erdmagnetfeld und dann insbesondere auf jegliche Elektrik und Elektronik auf der Erde kann er Technik, Zivilisation und Leben auf der Erde beeinflussen und sogar in katastrophalem Ausmaß gefährden. Aus den elektrisch geladenen Teilchen resultierender Magnetismus und aus ihnen resultierender elektrischer Strom in elektrischen und elektronischen Systemen können diese Systeme überlasten und zum Ausfall bringen, wie es in der Geschichte seit dem sogenannten Carrington-Event in 1859 (der wahrscheinlich nur deshalb erst in heutiger Zeit wirklich verheerende Wirkung gehabt hätte, weil sich damals das elektrische System auf der Erde im Wesentlichen auf Telegraphenleitungen beschränkte - der aber zu Polarlichtern führte, die nicht nur am Nordkap, sondern zum Beispiel auch in Rom sichtbar waren), danach in (allerdings bislang nur geringerem Ausmaß) bereits mehrere Male geschah. Statistische Wahrscheinlichkeit lässt schon seit einigen Jahren befürchten, einen auf die Erde gerichteten magnetischen Sturm möglicherweise noch größeren Ausmaßes als dem Carrington-Event wieder erwarten zu müssen, mit heute wegen der Allgegenwärtigkeit von elektrischen und elektronischen Systemen ganz erheblich katastrophaleren Wirkungen und Folgen.

Im Einzelnen ungeklärt, aber zu vermuten, ist auch der Einfluss auf Klima und Natur wie zum Beispiel auf Ebbe und Flut mit möglicherweise so katastrophalen Folgen, wie sie bei einem Tsunami zu beklagen sind. Ausfall elektronischer Systeme kann nur zum Beispiel, Flugzeuge zum Absturz, Stromversorgung zum erliegen bringen, mit naheliegend schwerwiegenden oder katastrophalen Sekundärfolgen.

DSCOVR ist ein einzelner Satellit, der mit verschiedenen Messapparaturen ausgestattet ist, um Weltraumwettervorhersagen insbesondere auch in Bezug auf Sonnenwind zu ermöglichen. Er ist auch vorgesehen, sich im Lagrange-Punkt 1 des Systems Sonne-Erde zu befinden. Beschrieben ist er zum Beispiel in Joe Burt, Bob Smith: "Deep Space Climate Observatory: The DSCOVR Mission", 2012 IEEE Aerospace Conference, 10. März 2012, ISSN: 1095-323X und in Adam Szabo: "Deep Space Climate Observatory (DSCOVR)", 6th NASA Space Weather & Robotic Mission Operations Workshop, 18. Oktober 2014: https://swc.ccmc.gsfc.nasa.gov/main//sites/swrc/presentations/2014_NASA_SWx_Wor kshop/Szabo_DSCOVR%200verview%20Space%20Weather%20Workshop.pdf (gefunden im Internet am 2019-02-07).

KuaFu ist ein System von drei Satelliten, die mit verschiedenen Messapparaturen ausgestattet sind, um Weltraumwettervorhersagen insbesondere auch in Bezug auf Sonnenwind zu ermöglichen. Einer der Satelliten ist vorgesehen, sich im Lagrange-Punkt L1 des Systems Sonne - Erde aufzuhalten, während die beiden anderen sich um die Erde bewegen sollen, und zwar um 180° versetzt in einer polaren Orbitalbahn. Beschrieben ist das System zum Beispiel in: ESA: "KuaFu SWE mission" (3. Juli 2012): https://www.belspo.be/belspo/space/doc/euPolicy/2012_07_03/ KuaFu.pdf (gefunden am 2016-05-19) und in China Daily: "China plans "KuaFu Mission" for Sun probe.", 20. Juli 2006: http://www.chinadaily.com.cn/china/2006-07/20/content_645326.htm (gefunden im Internet am 19. Mai 2016).

Der vorliegenden Erfindung liegt die Aufgabe zugrunde, ein System zu schaffen, das so rechtzeitig vor Sonnenstürmen warnt, dass auf der Erde Maßnahmen zum Vorbeugen störender oder zerstörerischer Folgen rechtzeitig ergriffen werden können.

Diese Aufgabe wird von einem System mit den Merkmalen des Anspruchs 1 gelöst. Bevorzugte Ausgestaltungen sind in den Unteransprüchen angegeben.

Die Erfindung ist ein satellitengestütztes Sonnensturm-Frühwarnsystem. Es dient dem Erzeugen eines Warnsignals und dessen Übermitteln an einen Empfänger auf der Erde bei Herannahen eines Sonnensturms an die Erde, und zwar so rechtzeitig vor dessen Eintreffen und des resultierenden übermäßigen Magnetismus, dass Maßnahmen zum Vorbeugen störender oder zerstörerischer Folgen rechtzeitig ergriffen werden können. Es können dann, nur zum Beispiel, Flugzeuge gelandet oder umgeleitet werden, Kraftwerke "heruntergefahren" werden - überhaupt elektrische und elektronische Geräte und von solchen zum Beispiel gesteuerte Technik kontrolliert abgeschaltet und bewusst außer Betrieb genommen werden, so dass Schaden vermieden oder zumindest vermindert werden kann.

Das erfindungsgemäße Frühwarnsystem weist eine Anzahl Satelliten (möglicherweise ausschließlich oder auch Nanosatelliten oder Nanosonden) auf, die in einem Bereich zwischen Erde und Sonne sind (sowie möglicherweise auch weitere Satelliten (auch wiederum möglicherweise auch Nanosatelliten oder Nanosonden) außerhalb dieses Bereichs). Die Satelliten sind eingerichtet, "stationär" zum Erdmittelpunkt und zur Verbindungslinie zwischen Erde und Sonne positioniert zu bleiben, nehmen also im Koordinatensystem aus Erdmittelpunkt (zum Beispiel als Nullpunkt) und Verbindungslinie zwischen Erde und Sonne (zum Beispiel als Nulllinie für Winkelkoordinaten) eine möglichst konstante Position ein.

Die Satelliten sind jeweils mit mindestens einem Sensor "zum Messen eines Parameters einer Teilchenströmung in seiner Umgebung" ausgerüstet, der nämlich eingerichtet ist, in seiner Umgebung mindestens eine physikalische Größe zu messen, deren Betrag sich in oder in der Umgebung von einem Sonnenwind oder Sonnensturm verändert (vorzugsweise in bereits erforschtem, bei Sonnenwind oder Sonnensturm bereits gemessenem, korreliertem oder hypothetischem, berechnetem Ausmaß), wie höchst beispielhaft insbesondere Magnetometer, Thermometer, Spektrometer, Ultraschallsensor, Massenspektometer und/oder Messgerät für Radioaktivität oder Gammastrahlung. Vorzugsweise handelt es sich dabei mindestens um ein Magnetometer, Sensorik zum Messen der Magnetfeldstärke in der Umgebung oder des einwirkenden Magnetfeldes. Diese Sensorik kann eine Vorrichtung des Satelliten auch zur Navigation oder Bestimmung seiner Position im Raum insbesondere bezüglich des Erdmagnetfeldes und so auch bezüglich Erdmittelpunkt und Verbindungslinie zwischen Erde und Sonne nutzen.

Die Satelliten stehen alle in Funksignalverbindung mit einem Empfänger (einer Empfangsstation) auf der Erde und zwar direkt und/oder über andere Satelliten des Systems (oder mindestens einen noch anderen Satelliten).

Die Satelliten sind stationär in einem Bereich mit einer Ausdehnung in Gestalt eines geraden Kreiszylinders mit der Verbindungslinie zwischen Sonne und Erde als Zylinderachse und mit einem Durchmesser kleiner als etwa das 10-Fache des Erddurchmessers (der rund 13.000 km beträgt). Vorzugsweise befindet sich einer der Satelliten, der in direkter Funksignalverbindung mit dem Empfänger auf der Erde steht (insbesondere der erdnächste), als "Hauptsatellit" im Lagrange-Punkt 1 des Systems Sonne - Erde, wo Satelliten mit besonders wenig Energieaufwand besonders sicher ihre Position halten können. Mindestens einer der Satelliten des Systems jedenfalls befindet sich nicht in dem Lagrange-Punkt 1. Vorzugsweise stehen alle anderen Satelliten des Systems (möglicherweise ausschließlich) mit diesem einen Satelliten in direkter Funksignalverbindung.

Jeder der Satelliten ist eingerichtet, über die Funksignalverbindung Signale zu dem Empfänger oder der Empfangsstation zu senden, und zwar erhalten sie einen insbesondere von der Sensorik (insbesondere von dem Magnetometer gemessenen) Messwert und/oder ein Warnsignal, das bei Überschreiten eines Grenzwertes von einer Signalverarbeitungseinrichtung am Satelliten mit dem Magnetometer oder Sensor, der den Wert gemessen hat, oder auf der Strecke der Funkverbindung (insbesondere an einem anderen Satelliten des Systems, zum Beispiel dem Hauptsatelliten, oder einen noch anderen Satelliten) erzeugt wird. Vorzugsweise kann (mindestens) ein erfindungsgemäßer Satellit auch auf mehr als eine physikalische Größe sensible Sensorik an Bord haben, um astronomische Parameter und insbesondere Eigenschaften von Sonnenwind und Sonnensturm zu messen und so erforschen zu können.

Ein Sonnensturm hat nach heutiger Kenntnis die Form einer "Wolke" der eingangs erwähnten geladenen Teilchen. Sie hat erhebliche Ausdehnung insbesondere auch quer zu Ihrer Bewegungsrichtung (weg von der Sonne, möglicherweise bedrohlich auf die Erde zu), nämlich insbesondere mit einer Querschnittsfläche (auch erheblich) größer als die Erdkreisfläche. Sie wird auf Ihrem Weg möglicherweise in Richtung Erde und an ihr vorbei vom Magnetfeld der Erde beeinflusst, so dass eine Wolke, die auf dem geradem Weg die Erde nicht berühren würde, bogenförmig auf die Erde zu gelenkt werden kann. Erfindungsgemäß können Messungen der Sensorik des Systems Aufschluss über den Verlauf des Weges und insbesondere auch die Geschwindigkeit und Entfernung zur Erde eines solchen bedrohlich auf die Erde zu gerichteten Sonnensturms geben.

Der Abstand zwischen den Satelliten beträgt vorzugsweise weniger als 3, besonders bevorzugt weniger als 2, zum Beispiel 1,5 Millionen km oder einen Abstand, über den sich eine Funkverbindung oder Signalverbindung sicher herstellen lässt. So lässt sich vorzugsweise zumindest indirekt über erdnähere Satelliten des Systems oder erdnähere noch andere Satelliten sicher und möglichst störungsarm mit dem Empfänger auf der Erde Signalverbindung herzustellen - vorzugsweise aber auch insbesondere durch Verrechnung der Zeitdifferenz von Messwerten (deren Veränderung und/oder Betrag die Anwesenheit und/oder das Herannahen anzeigt, damit korreliert ist oder es zumindest vermuten lässt) verschiedener Satelliten des Systems mit dem Abstand und/oder den Positionskoordinaten dieser Satelliten zu einander und/oder zur Erde Information über Weg des Sonnensturms, Geschwindigkeit und Entfernung zur Erde zu erhalten.

Nach "Sonnensturm-signifikanten" Messwerten auf einem der Satelliten und etwas später auf einem zweiten Satelliten können schon daraus bei deren bekannten Positionen Informationen über Weg, Geschwindigkeit und Entfernung zur Erde der Teilchenwolke in einer möglichen Datenverarbeitungseinrichtung des Systems (etwa bei der Empfangsstation und/oder im Hauptsatelliten) errechnet werden. Ist dieser Weg auf die Erde zu gerichtet, wird das System ein Warnsignal auslösen. Wird zum Beispiel etwas später eine Messung eines dritten noch erdnäheren Satelliten unveränderte, insbesondere nicht "Sonnensturm-signifikante" Werte ergeben, zeigt dies an, dass die Wolke nicht den Weg zur Erde genommen hat, sondern sich an ihr vorbei bewegt, und das System kann Entwarnung geben.

Vorzugsweise beträgt der Abstand (mindestens) des erdfernsten Satelliten zur Erde weniger als 50 Millionen km, besonders bevorzugt weniger als 20, zum Beispiel 10 Millionen km - oder (mindestens) eine Strecke, über die der herannahende Sonnenwind eine Zeit braucht, in der elektrische und elektronische Anlagen und Geräte und von solchen Geräten, Schaltungen oder Chips zum Beispiel gesteuerte Technik kontrolliert abgeschaltet und bewusst außer Betrieb genommen werden kann, so dass Schaden vermieden oder zumindest vermindert werden kann.

Ein Beispiel ist eine V-förmige Satellitenanordnung mit zweien in rund 9 Millionen km Entfernung (nach heutiger Erkenntnis zum Beispiel rund 2,6 h verbleibender Reisedauer des Sonnensturms zur Erde, zweien in rund 7,5 Millionen km (rund 2,2 h Reisedauer), zweien in rund 6 Millionen km (rund 1,8 h Reisedauer), zweien in rund 4,5 Millionen km (rund 1,3 h Reisedauer), zweien in rund 3 Millionen km (rund 50 min Reisedauer) und einem (im Lagrange-Punkt 1 des Systems Sonne-Erde) in rund 1,5 Millionen km (rund 25 min Reisedauer) Entfernung. Dies ermöglicht ein Erkennen eines Sonnensturms im Bereich der Satelliten des erfindungsgemäßen Systems (also in möglicherweise bedrohlicher Nähe zur Erde) um die Zeit der Reisedauer des Sonnensturms zur Erde früher, so dass auf der Erde Maßnahmen zum Vorbeugen störender oder zerstörerischer Folgen rechtzeitig ergriffen werden können.

Die Satelliten des Systems können eingerichtet sein, über die Funksignalverbindung in regelmäßiger Frequenz (zum Beispiel minütlich, viertelstündlich, halbstündlich oder stündlich) einen Messwert eines Sensors des Systems (insbesondere der eigenen Sensorik an Bord) und/oder ein Kontrollsignal zu der Empfangsstation zu senden, vorzugsweise um die Sonnensturm-Überwachung vorzugsweise zum gegebenenfalls nötigen Auslösen eines Warnsignals in diesem Zeittakt zuverlässig und möglichst früh zu ermöglichen, vorzugsweise aber möglicherweise auch, um zu kontrollieren, dass die Satelliten in Funktion und nicht (bei ausbleibender Sendung des regelmäßigen Signals) zum Beispiel durch Sonnenwindeinfluss selbst schon gestört und/oder außer Funktion gesetzt sind.

Ein Sonnenwind bzw. Sonnensturm hat nach heutiger Kenntnis die Form einer "Wolke" nicht nur mit durchaus über ihre Ausdehnung unterschiedlicher Dichte oder Konzentration der eingangs erwähnten geladenen Teilchen. Sie wird (zusätzlich zu ihrer erheblichen Ausdehnung insbesondere auch quer zu Ihrer Bewegungsrichtung weg von der Sonne auf Ihrem Weg in Richtung Erde und an Ihr vorbei vom Magnetfeld der Erde beeinflusst, so dass eine Wolke, die auf geradem Weg die Erde nicht berühren würde, dennoch zum Beispiel bogenförmig auf sie zu gelenkt werden kann.

Um Satelliten des erfindungsgemäßen Systems so zu positionieren, dass eine Wolke, die auf geradem oder auch bogenförmig abgelenktem Weg die Erde berührt, zuvor mindestens einen der Satelliten berührt und von seinem Magnetometer und/oder anderer Sensorik folglich mindestens ein "Sonnensturm-signifikanter" Messwerten etwa in Form von erhöhtem Magnetismus oder vergrößerter Magnetfeldstärke gemessen werden kann, ist mindestens einer, sind aber auch mehrere oder alle der Satelliten vorzugsweise folgendermaßen angeordnet, und zwar alternativ oder kumulativ.

Die Satelliten bilden vorzugsweise eine geradlinige Formation, insbesondere ist mindestens ein Satellit auf gerader Linie zwischen Erde und Sonne.

Sie bilden vorzugsweise eine V-förmige Formation, wobei das V (zum Beispiel im Wesentlichen in einer Ebene rechtwinklig zur Äquatorialebene der Erde, aber auch (ungefähr) in jeder anderen Ebene) von der Erde Richtung Sonne geöffnet ist - vorzugsweise mit einer Öffnungsweite des V größer als der Erddurchmesser.

Die Satelliten sind stationär in zwei länglichen oder linienförmigen Teilbereichen angeordnet mit der Verbindungslinie zwischen Sonne und Erde als Symmetrielinie der beiden Teilbereiche.

Die Satelliten sind stationär symmetrisch zur Verbindungslinie zwischen Sonne und Erde als Symmetrielinie zwischen jeweils zwei Satelliten.

Die Satelliten sind stationär in zwei länglichen oder linienförmigen und zueinander V-förmigen Teilbereichen angeordnet mit der Spitze des V in Richtung Erde.

Die Satelliten sind stationär in einem Bereich mit einer Ausdehnung in Gestalt eines geraden Kreiszylinders mit der Verbindungslinie zwischen Sonne und Erde als Zylinderachse und mit einem Durchmesser kleiner als etwa das 5-Fache oder 3-Fache des Erddurchmessers (der rund 13.000 km beträgt).

Die Satelliten sind stationär in einem Bereich, der eine Ausdehnung in Gestalt zweier gerader Kreiszylinder hat, deren Zylinderachsen V-förmig zueinander angeordnet sind mit der Verbindungslinie zwischen Sonne und Erde als Symmetrielinie der beiden V-förmig zueinander angeordneten Zylinderachsen und mit einem Abstand des erdfernsten Satelliten in dem einen kreiszylindrischen Teilbereich zum erdfernsten Satelliten in dem anderen kreiszylindrischen Teilbereich größer als etwa das 10-Fache oder 5-Fache oder 3-Fache des Durchmessers jedes der beiden Zylinder.

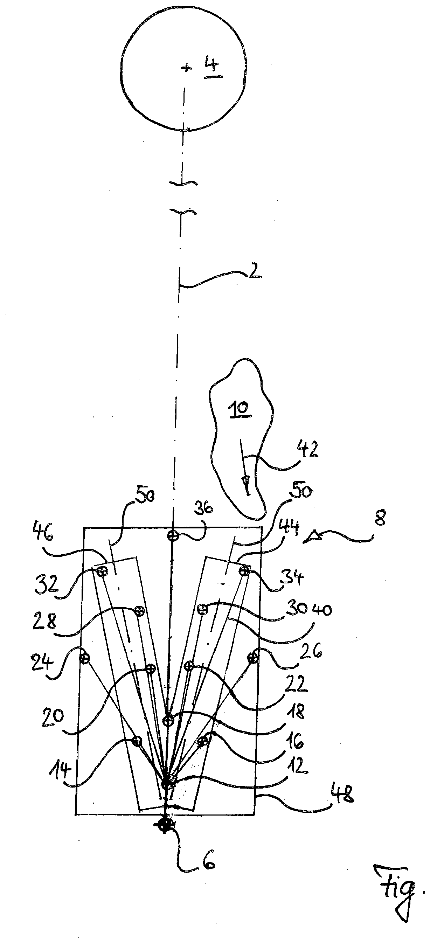

Weitere Vorteile, Ausgestaltungen und Details der Erfindung werden im Folgenden in der Beschreibung eines Ausführungsbeispiels mit Bezug auf die beigefügte Figur beschrieben:
- **Die Figur**: zeigt eine schematische Draufsicht auf ein erfindungsgemäßes Satelliten-gestütztes Sonnensturm-Frühwarnsystem in seiner Anordnung bezüglich Sonne und Erde.

Die Figur zeigt eine (ungefähr maßstäbliche) schematische Draufsicht auf die Verbindungslinie 2 zwischen der Sonne 4 oben als Kreis (mit bekanntlich rund 1,4 Millionen km Durchmesser also im Maßstab von rund 1: 100 Millionen) und Erde 6 (mit bekanntlich rund 13.000 km Durchmesser) unten als (kariert eingezeichnetem) Punkt 6. Diesbezüglich dargestellt ist ein erfindungsgemäßes Satelliten-gestütztes Sonnensturm-Frühwarnsystem 8 mit seinen Satelliten in erfindungsgemäßer Anordnung bezüglich Sonne 4 und Erde 6.

Es dient dem Erzeugen eines Warnsignals und dessen Übermitteln an einen Empfänger auf der Erde 6 bei Herannahen eines Sonnensturms 10 an die Erde, und zwar so rechtzeitig vor dessen Eintreffen und des resultierenden übermäßigen Teilchenstroms, dass Maßnahmen zum Vorbeugen störender oder zerstörerischer Folgen rechtzeitig ergriffen werden können. Es können dann, nur zum Beispiel, Flugzeuge gelandet werden, Kraftwerke "heruntergefahren" werden - überhaupt elektrische und elektronische Geräte und von solchen zum Beispiel gesteuerte Technik kontrolliert abgeschaltet und bewusst außer Betrieb genommen werden, dass Schaden vermieden oder zumindest vermindert werden kann.

Das Frühwarnsystem 8 weist dreizehn Satelliten 12 bis 36 auf, die in einem Bereich 38 zwischen Erde 6 und Sonne 4 erheblich näher an der Erde als an der Sonne stationär sind. Die Satelliten 12 bis 36 sind jeweils mit Sensorik (nicht dargestellt) zum Messen der Magnetflussdichte und anderen "Sonnensturm-signifikanten" physikalischen Größen in ihrer Umgebung ausgerüstet.

Die Satelliten 12 bis 36 stehen alle in Funk- und Signalverbindung 40 (abgebildet durch die Geraden zwischen den Satelliten 12 bis 36 und der Erde 6) mit einer Empfangsstation (nicht dargestellt) auf der Erde 6 und zwar direkt (nämlich der erdnächste "Hauptsatellit" 12 im Lagrange-Punkt Eins 12 des Systems Sonne-Erde) und die anderen Satelliten 14 bis 36 des Systems über den Hauptsatellit 12. Jeder der Satelliten 12 bis 36 ist eingerichtet, über diese Funksignalverbindung 40, Signale zu der Empfangsstation (nicht dargestellt) auf der Erde 6 zu senden enthaltend einen (insbesondere vom jeweiligen Sensor (nicht dargestellt) gemessenen) "Sonnensturm-signifikanten" Messwert und gegebenenfalls ein Warnsignal, das bei Überschreiten eines Grenzwertes von einer Signalverarbeitungseinrichtung (nicht dargestellt) am Satelliten 12 bis 36 erzeugt wird, wenn er einen "Sonnensturm-signifikanten" Messwert misst.

Ein Sonnensturm 10 hat nach heutiger Kenntnis die Form einer "Wolke" 10 der eingangs erwähnten geladenen Teilchen. Sie hat erhebliche Ausdehnung insbesondere auch quer zu Ihrer Bewegungsrichtung 42 (weg von der Sonne 4, möglicherweise auf die Erde 6 zu), nämlich insbesondere mit einer Querschnittsfläche (auch erheblich) größer als die Erdkreisfläche. Sie wird auf Ihrem Weg möglicherweise in Richtung Erde 6 und an ihr vorbei vom Magnetfeld der Erde 6 beeinflusst, so dass eine Wolke 10, die auf dem geradem Weg 42 die Erde 6 nicht berühren würde, bogenförmig auf die Erde 6 zu gelenkt werden kann. Im abgebildeten Beispiel können Messungen der Sensorik (nicht dargestellt) insbesondere der Satelliten 34, 26 und 16 Aufschluss über den weiteren Verlauf des Weges des Sonnensturms 10 geben: Nach erhöhten Werten beim Satelliten 34 und etwas später beim Satelliten 26 (woraus bei deren bekanntem Abstand zueinander die Geschwindigkeit der Wolke 10 errechenbar ist) wird nach nochmals so langer Zeit eine Messung des Satelliten 16 einen normalen Wert ergeben und anzeigen, dass die Wolke nicht den bogenförmigen Weg zur Erde (auf dem bezüglich der zwei Satelliten 34 und 26 der Satellit 16 liegt) genommen hat sondern sich an ihr vorbei bewegt.

Der Abstand zwischen den Satelliten 12 bis 36 beträgt rund 1 bis 1,5 Millionen km.

Um die Satelliten 12 bis 36 des Systems 8 so zu positionieren, dass eine Wolke, die auf geradem oder bogenförmig abgelenktem Weg die Erde 6 berühren würde, zuvor mindestens einen der Satelliten berührt und von seinem Sensor (nicht dargestellt) deren erhöhten Magnetismus oder vergrößerte Teilchenstärke messbar macht, sind die Satelliten folgendermaßen angeordnet.

Die Satelliten 12, 18 und 36 bilden stationär eine geradlinige Formation auf gerader Linie 2 zwischen Erde 6 und Sonne 4.

Die Satelliten 12 bis 34 bilden stationär eine V-förmige Formation 44, 46, wobei das V 44, 46 von der Erde 6 aus in Richtung Sonne 4 geöffnet ist - mit Öffnungsweiten des V in unterschiedlichen Abständen zur Erde 6 (Abständen der paarweise stationär symmetrisch zur Verbindungslinie 2 zwischen Sonne 4 und Erde 6 als Symmetrielinie angeordneten Satelliten 14, 16 sowie 20, 22 sowie 28, 30) erheblich größer als der Erddurchmesser.

Die Satelliten 12 bis 22 und 28 bis 34 sind stationär in mehreren länglichen oder linienförmigen Teilbereichen (zum Beispiel 44, 46) angeordnet jeweils mit der Verbindungslinie 2 zwischen Sonne 4 und Erde 6 als Symmetrielinie der beiden jeweiligen Teilbereiche.

Die Satelliten 14, 16 und 20 bis 34 sind stationär symmetrisch zur Verbindungslinie 2 zwischen Sonne 4 und Erde 6 als Symmetrielinie zwischen jeweils zwei Satelliten.

Die Satelliten 12 bis 22 und 28 bis 34 sind stationär in mehreren länglichen oder linienförmigen und zueinander V-förmigen Teilbereichen (zum Beispiel 44, 46) angeordnet mit der Spitze des V in Richtung Erde 6.

Die Satelliten 12 bis 36 sind stationär in einem Bereich mit einer Ausdehnung in Gestalt eines geraden Kreiszylinders (abgebildet ist dessen rechteckige Seitenansicht 48) mit der Verbindungslinie 2 zwischen Sonne 4 und Erde 6 als Zylinderachse und mit einem Durchmesser etwas größer als der Sonnendurchmesser.

Die Satelliten 12 bis 22 und 28 bis 34 sind stationär in einem Bereich, der eine Ausdehnung in Gestalt zweier gerader Kreiszylinder (abgebildet ist deren jeweilige rechteckige Seitenansicht 44 und 46) hat, deren Zylinderachsen V-förmig zueinander angeordnet sind mit der Verbindungslinie 2 zwischen Sonne 4 und Erde 6 als Symmetrielinie der beiden V-förmig zueinander angeordneten Zylinderachsen 50 und mit einem Abstand des erdfernsten Satelliten 32 in dem einen kreiszylindrischen Teilbereich 46 zum erdfernsten Satelliten 34 in dem anderen kreiszylindrischen Teilbereich 44 größer als das 3-Fache des Durchmessers jedes der beiden Zylinder 44, 46.

## Patentansprüche

1. Satelliten-gestütztes Sonnensturm-Frühwarnsystem, zum Bereitstellen eines Warnsignals bei Herannahen eines Sonnensturms an die Erde, mit einer Anzahl Satelliten in einem Bereich zwischen Erde und Sonne sowie stationär zum Erdmittelpunkt und zur Verbindungslinie zwischen Erde und Sonne, die jeweils mit mindestens einem Sensor zum Messen mindestens eines Parameters einer Teilchenströmung in seiner Umgebung ausgerüstet sind und die alle, direkt und/oder über einen oder einen der Satelliten, in Funksignalverbindung mit einem Empfänger auf der Erde stehen und von denen jeder eingerichtet ist, über die Funksignalverbindung einen Messwert eines Sensors des Systems und/oder ein Warnsignal bei Überschreiten eines Grenzwertes durch einen Messwert eines Sensors des Systems zu dem Empfänger zu senden, **gekennzeichnet durch** mindestens einen der Satelliten nicht im Lagrange-Punkt 1 des Systems Sonne-Erde und **dadurch, dass** der Bereich eine Ausdehnung in Gestalt eines geraden Kreiszylinders hat mit der Verbindungslinie zwischen Sonne und Erde als Zylinderachse und mit einem Durchmesser kleiner als das 10-fache des Erddurchmessers.

2. System nach Anspruch 1, **gekennzeichnet durch** einen der Satelliten, der in direkter Funksignalverbindung mit dem Empfänger auf der Erde steht, im Lagrange-Punkt 1 des Systems Sonne-Erde.

3. System nach einem der vorhergehenden Ansprüche, **dadurch gekennzeichnet, dass** die Satelliten eine V-förmige Formation bilden, wobei das V von der Erde Richtung Sonne geöffnet ist.

4. System nach einem der vorhergehenden Ansprüche, **dadurch gekennzeichnet, dass** der Bereich zwei längliche oder linienförmige Teilbereiche aufweist mit der Verbindungslinie zwischen Sonne und Erde als Symmetrielinie der beiden Teilbereiche.

5. System nach dem vorhergehenden Anspruch, **dadurch gekennzeichnet, dass** die Teilbereiche V-förmig zueinander angeordnet sind mit der Spitze des V in Richtung Erde.

6. System nach einem der vorhergehenden Ansprüche, **dadurch gekennzeichnet, dass** der Bereich eine Ausdehnung in Gestalt eines geraden Kreiszylinders hat mit der Verbindungslinie zwischen Sonne und Erde als Zylinderachse und mit einem Durchmesser kleiner als das 3-fache des Erddurchmessers.

7. System nach einem der vorhergehenden Ansprüche, **dadurch gekennzeichnet, dass** der Bereich eine Ausdehnung in Gestalt zweier gerader Kreiszylinder hat, deren Zylinderachsen V-förmig zueinander angeordnet sind mit der Verbindungslinie zwischen Sonne und Erde als Symmetrielinie der beiden V-förmig zueinander angeordneten Zylinderachsen und mit einem Abstand des erdfernsten Satelliten in dem einen kreiszylindrischen Teilbereich zum erdfernsten Satelliten in dem anderen kreiszylindrischen Teilbereich größer als das 5-Fache des Durchmessers jedes der beiden Zylinder.

8. System nach einem der vorhergehenden Ansprüche, **dadurch gekennzeichnet, dass** der Abstand des erdfernsten Satelliten zur Erde weniger als 50 Millionen km beträgt.

9. System nach einem der vorhergehenden Ansprüche, **dadurch gekennzeichnet, dass** der Abstand zwischen den Satelliten weniger als 3 Millionen km beträgt.

## Claims

1. Satellite-based solar storm early warning system for providing a warning signal when a solar storm is approaching the Earth, comprising a number of satellites in a region between the Earth and the Sun as well as stationary with respect to the centre of the Earth and with respect to the connection line between the Earth and the Sun, which satellites are each equipped with at least one sensor for measuring at least one parameter of a particle flow in the surroundings thereof and which are all in radio signal connection with a receiver on Earth directly and/or via one or one of the satellites and each of which satellites is configured to send to the receiver, via the radio signal connection, a measured value of a sensor of the system and/or a warning signal if a measured value of a sensor of the system exceeds a limit value, **characterised by** at least one of the satellites not at the Lagrangian point 1 of the Sun-Earth system and in that the region has an extension in the shape of a straight circular cylinder with a connection line between the Sun and the Earth as the cylinder axis and with a diameter of less than 10 times the diameter of the Earth.

2. System according to claim 1, **characterised by** one of the satellites at the Lagrangian point 1 of the Sun-Earth system, which satellite is in direct radio signal connection with the receiver on Earth.

3. System according to either of the preceding claims, **characterised in that** the satellites form a V-shaped formation, the V opening out from the Earth towards the Sun.

4. System according to any of the preceding claims, **characterised in that** the region comprises two elongate or linear subregions with the connection line between the Sun and the Earth as the line of symmetry of the two subregions.

5. System according to any of the preceding claims, **characterised in that** the subregions are arranged in a V-shape with the tip of the V pointing towards Earth.

6. System according to any of the preceding claims, **characterised in that** the region has an extension in the shape of a straight circular cylinder with the connection line between the Sun and the Earth as the cylinder axis and with a diameter of less than 3-times the diameter of the Earth.

7. System according to any of the preceding claims, **characterised in that** the region has an extension in the shape of two straight circular cylinders, the cylinder axes of which are arranged in a V-shape with the connection line between the Sun and the Earth as the line of symmetry of the two cylinder axes arranged in a V-shape and with a distance between the satellite furthest from the Earth in one circular-cylindrical subregion and the satellite furthest from the Earth in the other circular-cylindrical subregion of greater than 5-times the diameter of each of the two cylinders.

8. System according to any of the preceding claims, **characterised in that** the distance between the satellite furthest from the Earth and the Earth is less than 50 million km.

9. System according to any of the preceding claims, **characterised in that** the distance between the satellites is less than 3 million km.

## Revendications

1. Système d'alerte précoce de tempête solaire par satellite, pour fournir un signal d'alerte lorsqu'une tempête solaire s'approche de la Terre, avec un certain nombre de satellites dans une zone entre la Terre et le Soleil et stationnaires par rapport au centre de la Terre et à la ligne de liaison entre la Terre et le Soleil, qui sont chacun équipés d'au moins un capteur pour mesurer au moins un paramètre d'un flux de particules dans son environnement et qui sont tous, directement et/ou via un ou l'un des satellites, en liaison de signal radio avec un récepteur sur Terre et dont chacun est adapté pour envoyer au récepteur, via la liaison de signal radio, une valeur de mesure d'un capteur du système et/ou un signal d'alerte lorsqu'une valeur limite est dépassée par une valeur de mesure d'un capteur du système, **caractérisé par** au moins l'un des satellites qui ne se trouve pas au point de Lagrange 1 du système Soleil-Terre et en ce que la zone présente une extension sous la forme d'un cylindre circulaire droit avec la ligne de liaison entre le Soleil et la Terre en tant qu'axe de cylindre et avec un diamètre inférieur à 10 fois le diamètre de la Terre.

2. Système selon la revendication 1, **caractérisé par** l'un des satellites, qui est en liaison de signal radio directe avec le récepteur sur Terre, au niveau du point de Lagrange 1 du système Soleil-Terre.

3. Système selon l'une des revendications précédentes, **caractérisé en ce que** les satellites forment une formation en V, dans lequel le V est ouvert de la Terre vers le Soleil.

4. Système selon l'une des revendications précédentes, **caractérisé en ce que** la zone présente deux zones partielles allongées ou linéaires avec la ligne de liaison entre le Soleil et la Terre en tant que ligne de symétrie des deux zones partielles.

5. Système selon la revendication précédente, **caractérisé en ce que** les zones partielles sont disposées en V l'une par rapport à l'autre avec la pointe du V en direction de la Terre.

6. Système selon l'une des revendications précédentes, **caractérisé en ce que** la zone présente une extension sous la forme d'un cylindre circulaire droit avec la ligne de liaison entre le Soleil et la Terre en tant qu'axe de cylindre et avec un diamètre inférieur à 3 fois le diamètre de la Terre.

7. Système selon l'une des revendications précédentes, **caractérisé en ce que** la zone présente une extension sous la forme de deux cylindres circulaires droits, dont les axes de cylindre sont disposés en V l'un par rapport à l'autre avec la ligne de liaison entre le Soleil et la Terre en tant que ligne de symétrie entre les deux axes de cylindre en V et avec une distance entre le satellite le plus éloigné dans une première zone partielle cylindrique circulaire et le satellite le plus éloigné dans l'autre partie cylindrique circulaire supérieure à 5 fois le diamètre de chacun des deux cylindres.

8. Système selon l'une des revendications précédentes, **caractérisé en ce que** la distance du satellite le plus éloigné par rapport à la Terre est inférieure à 50 millions de kilomètres.

9. Système selon l'une des revendications précédentes, **caractérisé en ce que** la distance entre les satellites est inférieure à 3 millions de km.
